(19) Europäisches Patentamt
European Patent Office
Office européen des brevets

(11) Numéro de publication : **0 681 173 A1**

(12) # DEMANDE DE BREVET EUROPEEN

(21) Numéro de dépôt : 95400988.2

(22) Date de dépôt : 02.05.95

(51) Int. Cl.⁶ : **G01M 11/02**

(30) Priorité : 04.05.94 FR 9405573

(43) Date de publication de la demande :
08.11.95 Bulletin 95/45

(84) Etats contractants désignés :
**DE GB**

(71) Demandeur : **FRANCE TELECOM Exploitant Autonome de Droit Public, 6, Place d'Alleray F-75015 Paris (FR)**

(72) Inventeur : **Blanc, Hervé Foyer du Pellet, 19 rue de Kerwenet F-22560 Trebeurden (FR)**
Inventeur : **Glasser, Jean 12 rue de l'Ile Grande F-22560 Trebeurden (FR)**

(74) Mandataire : **Cabinet Martinet & Lapoux BP 405 F-78055 Saint Quentin en Yvelines Cédex (FR)**

(54) **Système de détermination de la fonction caractéristique bidimensionnelle d'un élément continu de transformation optique.**

(57) Une source (20) projete à travers une mire (MI) un faisceau lumineux incident (FI) sur une surface (S) d'un élément continu de conversion d'image (22). La mire définit des surfaces transparente et opaque (S1,S2) délimitées par un angle. Un dispositif optoélectronique (23) convertit des niveaux élémentaires de luminosité (IR(ui,vj)) d'une image (IR) produite par l'élément (22) en réponse au faisceau incident, respectivement en des niveaux électriques (IR$_{ui,vj}$). Un calculateur (25) calcule une dérivée partielle bidimensionnelle pour le niveau électrique correspondant à chacun des niveaux élémentaires de luminosité de l'image résultante en fonction des niveaux électriques en réponse à des niveaux élémentaires de luminosité contigus audit chacun des niveaux élémentaires pour produire la fonction caractéristique.

FIG.3

EP 0 681 173 A1

La présente invention concerne un système pour déterminer la fonction caractéristique bidimensionnelle d'un élément continu de transformation optique.

L'élément continu de transformation optique est un instrument optique ou un moyen optoélectronique servant à former des images, tel que par exemple une lentille, un objectif photographique, un film photographique, une fibre optique, ou encore un tambour photoconducteur de photocopieur, de télécopieur ou d'imprimante. La fonction caractéristique bidimensionnelle autorise une quantification de la dégradation affectant des images produites par l'élément continu en réponse à une illumination de ce dernier, et notamment une mesure de l'atténuation du contraste de ces images en fonction de la fréquence spatiale d'ondes optiques illuminant l'élément continu. Par exemple pour des lentilles, films photographiques et tambours photoconducteurs, les images produites consistent respectivement en des images optiques, des négatifs photographiques et des images imprimées sur papier.

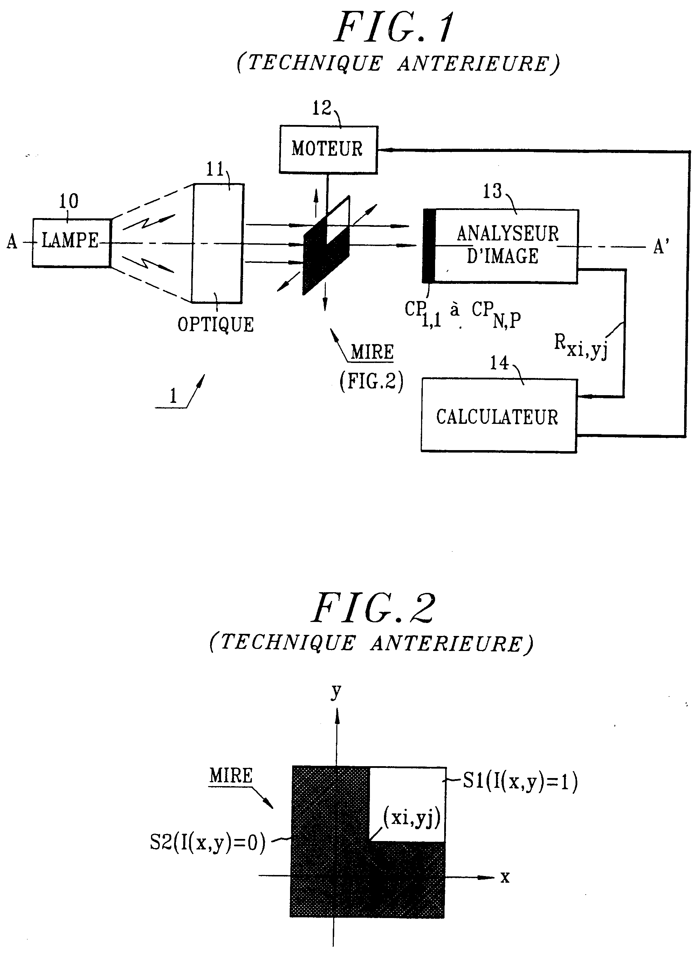

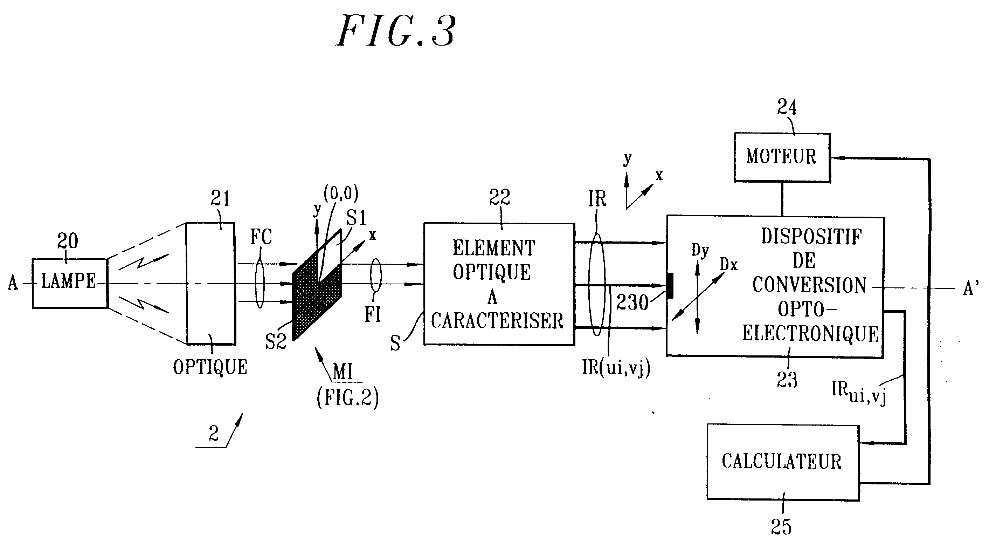

En référence aux figures 1 et 2, la demande de brevet français N° 93-15304 déposée le 20 décembre 1993 non publiée, et opposable en conséquence à la présente demande uniquement au titre de la nouveauté, décrit un système de détermination de la fonction caractéristique bidimensionnelle d'une cellule photosensible discrète. Ce système 1 comprend une lampe 10, un dispositif optique de focalisation et de collimation 11, une mire MIRE selon la figure 2, un moyen moteur 12 pour déplacer bidirectionnellement la mire, un analyseur d'image 13 dont l'une de cellules photosensibles élémentaires $CP_{1,1}$ à $CP_{N,P}$ est à caractériser, et un calculateur 14.

Comme montré à la figure 2, la mire MIRE est une lame rectangulaire transparente à des longueurs d'onde d'un faisceau lumineux, telle que lame de verre, dont une face comporte une surface plane S2 opaque auxdites longueurs d'onde, comme illustrée en zone ombrée. Cette surface opaque est délimitée par les chants de la lame et les côtés d'un angle rentrant en regard d'un coin de la lame. Selon la réalisation illustrée, l'angle rentrant est égal à 270° et a un sommet de coordonnées (xi,yj) dans un repère cartésien d'axes (x,y) du plan de la mire. Par exemple, la surface opaque S2 résulte du dépôt d'une mince couche d'aluminium, en forme de dièdre ayant une "épaisseur" sensiblement égale à la moitié de l'une des dimensions, largeur ou longueur, de la lame. La surface S1 complémentaire à la surface opaque S2 sur la lame est délimitée par un angle saillant complémentaire, égal à 90° selon la réalisation illustrée, et est transparente. Selon une autre variante, la nature transparente et opaque des surfaces S1 et S2 est inversée, la surface opaque étant alors une portion rectangulaire de surface avec un angle droit saillant au sommet (xi,yj).

Un faisceau lumineux produit par la lampe 10 est projeté à travers le dispositif optique 11 pour former un faisceau lumineux collimaté sur une face de la mire. Les chants de la lame de verre constituant la mire sont emprisonnés dans un cadre solidaire de l'élément mobile d'une table micrométrique verticale constituant le moyen moteur 12 afin que la mire puisse être déplacée suivant deux directions orthogonales à l'axe optique AA' du dispositif 11 et situées dans un plan parallèle et distant de quelques centimètres du plan des cellules photosensibles discrètes $CP_{1,1}$ à $CP_{N,P}$ de l'analyseur 13. L'une $CP_{n,p}$ des cellules $CP_{1,1}$ à $CP_{N,P}$ coïncide sensiblement avec le sommet d'angle rentrant sur la mire pour une position donnée de la mire. L'éclairement lumineux traversant la mire est nul "0" à travers la surface opaque S2 et est maximal "1" à travers la surface transparente S1. Une première portion de la surface sensible de la cellule photosensible $CP_{n,p}$ reçoit donc un éclairement lumineux maximal "1", et une seconde portion de la surface sensible reçoit un éclairement lumineux nul "0". Une image de la mire est ainsi formée sur la surface de la cellule photosensible. Ces première et seconde portions de la surface sensible de la cellule photosensible $CP_{n,p}$ sont délimitées, comme les première surface S1 et seconde surface S2 de la mire (figure 2), par les côtés d'un angle droit rentrant/saillant. Pour des coordonnées données (xi, yj) du sommet d'angle droit rentrant de la surface opaque de la mire, la cellule photosensible $CP_{n,p}$ produit un signal électrique $R_{xi,yj}$ d'amplitude égale à:

$$R_{xi,yj} = \int_x \int_y C(x,y).I(x,y).dx.dy \ ,$$

où x et y sont deux variables respectives définies selon des largeur et hauteur de la surface sensible de la cellule photosensible, $C(x,y)$ désigne la fonction caractéristique bidimensionnelle de la cellule photosensible, avec $C(\infty)=0$, et $I(x,y)$ la fonction d'éclairement lumineux définie par :

$$\begin{cases} I(x,y) = "1" \text{ pour } x \geq xi \text{ et } y \geq yj \ , \\ I(x,y) = "0" \text{ pour } x < xi \text{ et } y < yj \end{cases}$$

Soit $R_{u,v}$ la fonction continue à deux variables associée à la fonction discrète à deux variables précitée $R_{xi,yj}$ et définie pour tout couple (u,v) dans le repère (x,y) du plan de la mire.

La dérivée partielle en u,

$$\frac{\partial}{\partial u}\left(R_{u,\,v}\right),$$

de $R_{u,v}$ est égale à:

$$\int_x\int_y \frac{\partial}{\partial u}\, C(x,\, y).\, I(u,\, v).\, dx\, dy$$

soit :

$$\int_y dy \int_x \frac{\partial}{\partial u}\, C(x,\, y).\, I(u,\, v).\, dx$$

soit :

$$\int_v^{+\infty} dy \int_u^{+\infty} \frac{\partial}{\partial u}\, C(x,\, y)dx \qquad ,$$

puisque $I(x,y)="1"$ pour $x \geqq u$ et $y \geqq v$.

Ce dernier résultat s'écrit:

$$\frac{\partial}{\partial u}\left(R_{u,\,v}\right)=\int_v^{+\infty}dy.\,\left[C(x,\,y)\right]_u^{+\infty} = -\int_v^{+\infty}C(u,\,y)dy\, . \qquad (1)$$

Par ailleurs la dérivée partielle en v de la fonction définie dans la relation (1) est égale à:

$$\frac{\partial^2}{\partial u\partial v}\left(R_{u,\,v}\right)= -\frac{\partial}{\partial v}\int_v^{+\infty}C(u,\,y).\,dy\, ,$$

soit :

$$\frac{\partial^2}{\partial u\partial v}\left(R_{u,\,v}\right)=-\int_v^{+\infty} -\frac{\partial}{\partial v}\, C(u,\,y)dy \; = C(u,\,v)$$

Par conséquent, la double dérivée partielle en u et v de la fonction $R_{u,v}$ est égale à $C(u,v)$.

Ce résultat mathématique remarquable est appliqué à la fonction discrète $R_{xi,yj}$ définie précédemment de la manière suivante.

Le moyen moteur 12, sous la commande du calculateur 14, déplace la mire MIRE dans le plan de mire qui est le plan du repère cartésien d'axes (x,y). Ainsi le sommet d'angle rentrant de la surface opaque S2 de la mire est successivement localisé à plusieurs positions ayant des abscisses xi telles que $x1 \leqq xi \leqq xI$ et des ordonnées yj telles que $yl \leqq yj \leqq yJ$ , coïncidant avec des points discrets respectifs d'une zone incluant la surface sensible de la cellule photosensible $CP_{n,p}$ à caractériser et une bande périphérique à cette surface sensible. Les points discrets définissent un quadrillage matriciel de cette zone. La fonction caractéristique de la cellule photosensible est en effet définie pour une surface, ou zone, ayant des dimensions sensiblement supérieures à celles de la surface sensible de la cellule photosensible. La définition de cette zone sensiblement plus grande résulte de fuites de charge intervenant entre cellules photosensibles adjacentes et autres phénomènes physiques.

Des signaux électriques respectifs $R_{xi,yj}$ sont obtenus en sortie de l'analyseur 13 pour lesdites plusieurs positions (xi,yj) et les amplitudes des signaux électriques sont mémorisées dans le calculateur sous la forme d'une matrice

$$\left( R_{x_i,y_j} \right)_{\substack{1 \leq i \leq I \\ 1 \leq j \leq J}}.$$

Un calcul de pentes différentielles suivant x puis y est accompli pour chacun des éléments de la fonction matricielle

$$\left( R_{x_i,y_j} \right)_{\substack{1 \leq i \leq I \\ 1 \leq j \leq J}}$$

pour obtenir une matrice de valeurs approchant la fonction caractéristique C(x,y) en des points respectifs (xi,yj). Un lissage de cette matrice de valeurs conduit à la fonction caractéristique recherchée C(x,y).

Les étapes de calcul et lissage précitées peuvent être inversées. Dans ce cas, une fonction définie par la fonction continue $R_{u,v}$ précédemment introduite est obtenue par lissage de la matrice

$$\left( R_{x_i,y_j} \right)_{\substack{1 \leq i \leq I \\ 1 \leq j \leq J}}.$$

A partir de cette fonction continue $R_{u,v}$ est déduite la fonction caractéristique C(x,y) par double dérivée partielle en x et y de $R_{u,v}$.

Ainsi la technique antérieure est limitée à la caractérisation d'un élément optique discret par exemple sous la forme d'une ou plusieurs cellules photosensibles. La fonction d'une cellule photosensible est de transformer une énergie lumineuse incidente en une énergie électrique. Une cellule photosensible connue est une photodiode. Elle est notamment sous la forme d'une jonction entre un substrat en silicium dopé p et une mince zone diffusée de silicium dopé n, ladite jonction étant recouverte d'une couche isolante en oxyde de silicium.

L'invention vise à fournir un système de détermination de la fonction caractéristique bidimensionnelle d'un élément continu de transformation optique, par contraste avec le système de caractérisation d'un élément optique discret, tel que cellule photosensible, selon la technique antérieure. En réponse à une illumination, un élément continu de transformation optique produit une image résultante plutôt qu'un signal électrique représentatif d'une intensité lumineuse reçue.

A cette fin, selon une première réalisation, un système de détermination de la fonction caractéristique bidimensionnelle d'un élément continu de transformation optique, comprenant

une source lumineuse pour produire un faisceau lumineux qui est projeté, à travers une mire, en un faisceau lumineux incident sur une surface dudit élément continu,

ladite mire définissant deux surfaces respectivement transparente et opaque délimitées par un angle, est caractérisé en ce qu'il comprend

un moyen de conversion optoélectronique pour convertir des niveaux de luminosité de zones élémentaires d'une image résultante produite par ledit élément continu en réponse audit faisceau lumineux incident, respectivement en des niveaux de signal électrique, et

un moyen de calcul pour calculer une dérivée partielle bidimensionnelle pour le niveau de signal électrique correspondant à chacune des zones élémentaires de l'image résultante en fonction des niveaux de signal électrique produits par ledit moyen de conversion en réponse à des niveaux de luminosité respectifs de zones élémentaires contiguës à ladite chacune des zones élémentaires afin de produire ladite fonction caractéristique.

Selon une seconde réalisation, un système de détermination de la fonction caractéristique bidimensionnelle d'un élément continu de transformation optique, comprenant

une source lumineuse pour produire un faisceau lumineux qui est projeté, à travers une mire, en un faisceau lumineux incident sur une surface dudit élément continu,

ladite mire définissant deux surfaces respectivement réfléchissante et absorbante délimitées par un angle,

est caractérisé en ce qu'il comprend

un moyen de conversion optoélectronique pour convertir des niveaux de luminosité de zones élémentaires d'une image résultante produite par ledit élément continu en réponse audit faisceau lumineux incident, respectivement en des niveaux de signal électrique, et

un moyen de calcul pour calculer une dérivée partielle bidimensionnelle pour le niveau de signal électrique correspondant à chacune des zones élémentaires de l'image résultante en fonction des niveaux de signal électrique produits par ledit moyen de conversion en réponse à des niveaux de luminosité respectifs de zones élémentaires contiguës à ladite chacune des zones élémentaires afin de produire ladite fonction caractéristique.

De préférence, le système comprend un moyen moteur commandé par ledit moyen de calcul pour déplacer un capteur dudit moyen de conversion optoélectronique suivant deux directions respectives parallèles à des côtés dudit angle afin de positionner le capteur à des positions successives repérées bidimensionnellement définissant respectivement lesdites zones élémentaires de l'image résultante.

Typiquement, l'angle est sensiblement égal à 90° ou 270°.

L'élément continu de transformation optique peut être un instrument optique, auquel cas l'image résultante est sous la forme d'une image optique. Il peut également être un film photographique, l'image résultante étant alors sous la forme d'un négatif photographique projeté vers le moyen de conversion optoélectronique. Selon un dernier exemple, l'élément continu de transformation optique est une surface photoconductrice, l'image résultante étant sous la forme d'une image imprimée sur papier projetée vers le moyen de conversion optoélectronique.

D'autres caractéristiques et avantages de la présente invention apparaîtront plus clairement à la lecture de la description suivante de réalisations préférées de l'invention en référence aux dessins annexés correspondants dans lesquels :

- la figure 1, déjà commentée, est un bloc-diagramme d'un système de détermination de la fonction caractéristique bidimensionnelle d'une cellule photosensible selon la technique antérieure;
- la figure 2, également déjà commentée, est une vue de face d'une mire appartenant au système de la figure 1; et
- la figure 3 est un bloc-diagramme d'un système de détermination de la fonction caractéristique bidimensionnelle d'un élément continu de transformation optique selon l'invention.

En référence à la figure 3, un système de détermination 2 selon l'invention comprend une lampe 20, un dispositif optique de focalisation et collimation 11, une mire MI du type montré à la figure 2 et décrit dans le préambule de la description, un élément continu de transformation optique à caractériser 22, un dispositif de conversion optoélectronique 23, un moyen moteur 24 et un calculateur 25. La lampe 20, le dispositif optique 21, la mire MI et l'élément à caractériser sont fixes et successivement disposés transversalement à l'axe optique AA' du dispositif optique 21. La lampe 20 produit un faisceau lumineux qui est collimaté par le dispositif optique 21 en un faisceau lumineux collimaté FC projeté sur une face de la mire MI. Le sommet de l'angle séparant les surfaces transparente et opaque S1 et S2 est situé à l'origine (x=0, y=0) d'un repère fixe d'axes (x,y) orthogonal à l'axe AA'. En passant à travers la mire fixe MI, le faisceau lumineux FC est transformé en un faisceau lumineux incident FI présentant une fonction d'intensité lumineuse I(x,y), telle que :

$$\begin{cases} \mathtt{I(x,y)} = "1" \text{ pour } x \geq 0 \text{ et } y \geq 0, \\ \mathtt{I(x,y)} = "0" \text{ pour } x < 0 \text{ et } y < 0 \end{cases}$$

où "1" et "0" désignent respectivement des intensités lumineuses maximale et nulle.

Le faisceau lumineux incident FI est projeté sur une surface S de l'élément continu de transformation optique à caractériser 22 qui produit en réponse une image résultante IR.

L'élément optique peut être, à titre d'exemple, une lentille, un objectif photographique, un film photographique, une fibre optique, ou encore un tambour photoconducteur de photocopieur. L'image résultante IR consiste alors, en fonction de la nature de l'élément optique 22, en une image optique, un négatif photographique ou une image imprimée sur papier.

Il est rappelé qu'un tambour photoconducteur d'un photocopieur présente une surface photoconductrice qui est chargée électriquement préalablement à une opération de photocopie. Sur cette surface photoconductrice, les zones illuminées se déchargent tandis que les zones maintenues dans l'obscurité restent chargées. Ces zones restées chargées attirent une encre sèche qui est imprimée sur du papier. Dans ce cas, comme pour un négatif photographique, l'image imprimée sur papier est éclairée par une source lumineuse, telle que la lampe, pour être projetée vers le dispositif de conversion optoélectronique 23.

En revenant à la figure 3, l'image résultante IR est définie en chaque point de coordonnées (u,v) du repère d'axes (x,y) par une fonction d'intensité lumineuse IR(u,v), telle que :

$$IR(u,v) = \int_x \int_y C(x,y).I(x-u,y-v).dx.dy$$

où C(x,y) est la fonction caractéristique bidimensionnelle de l'élément optique 22, et I(x,y) est la fonction d'intensité définie précédemment.

L'image IR est scrutée par un capteur optoélectronique 230 dans le dispositif de conversion 23 en situant successivement le capteur en plusieurs positions définissant un quadrillage sensiblement matriciel de l'image résultante IR. Ce quadrillage matriciel de l'image résultante IR est obtenu par un déplacement pas à pas du dispositif 23 fixé à un bras d'entraînement du moyen moteur 24, suivant deux directions Dx et Dy orthogonales à l'axe AA' et respectivement parallèles aux côtés de l'angle de la mire MI. Les pas de déplacement du capteur optoélectronique dans les deux directions Dx et Dy sont choisis sensiblement égaux respectivement aux côtés de la surface intégratrice dudit capteur optoélectronique. Le moyen moteur 24 commandé par le calculateur 25 positionne le capteur 230 par exemple à des positions successives suivant des lignes successives qui sont par exemple parallèles à la direction Dx du quadrillage.

Pour chaque position du capteur 230, le dispositif de conversion 23 produit un niveau de signal électrique $IR_{ui,vj}$ respectif qui est fonction du niveau de luminosité IR(ui,vj) d'une zone élémentaire dans l'image résultante IR qui est observée par le capteur 230 pour ladite position. i et j désignent deux indices variant respectivement entre 0 et I et O et J, et (I,J) dénote les dimensions du quadrillage matriciel. Le niveau de luminosité IR(ui, vj) correspond au niveau de la fonction d'intensité luminosité IR(u,v) pour un point discret (u = ui, v = vj) de l'image résultante.

Ces I.J niveaux de signal $IR_{ui, vj}$ sont transmis successivement au calculateur 25 qui les mémorise sous la forme d'une fonction matricielle

$$IR(ui,vj) {\scriptstyle \begin{matrix} 0 \le i \le I \\ 0 \le j \le J \end{matrix}} \ .$$

Le calculateur 25 calcule des pentes différentielles suivant u et v, c'est-à-dire des dérivées partielles bidimensionnelles, en chacun des niveaux de signal de la fonction matricielle

$$IR(ui,vj) {\scriptstyle \begin{matrix} 0 \le i \le I \\ 0 \le j \le J \end{matrix}}$$

pour produire une matrice de valeurs discrètes approchant la fonction caractéristique C(x,y). La dérivée partielle bidimensionnelle pour un niveau de signal donné de la fonction matricielle correspondant à une position donnée du capteur 230 et donc à une zone élémentaire dans l'image résultante IR, est calculée en fonction des niveaux de signal électrique produits par le dispositif de conversion 23 en réponse à des niveaux de luminosité respectifs de zones élémentaires contiguës à la zone élémentaire donnée. Un lissage de la matrice de valeurs discrètes approchant la fonction caractéristique C(x,y) peut également être mis en oeuvre dans le calculateur pour obtenir une fonction continue correspondante.

Le résultat précédent peut être expliqué mathématiquement de la manière suivante. Soit IR(u,v) la fonction continue introduite précédemment et associée à la fonction matricielle

$$IR(ui,vj) {\scriptstyle \begin{matrix} 0 \le i \le I \\ 0 \le j \le J \end{matrix}} .$$

La dérivée partielle en u, $\frac{\partial}{\partial u}$ (IR(u, v)), de IR(u,v) est égale à :

$$\int_x \int_y \frac{\partial}{\partial u} C(x, y).IR(x - u, y - v).dx.dy$$

soit :

$$\int_y dy \int_x \frac{\partial}{\partial u} C(x,y).IR(x - u, y - v).dx$$

$$= \int_v^{+\infty} dy \int_u^{+\infty} \frac{\partial}{\partial u} C(x, y)dx \quad ,$$

puisque IR(x,y)="1" pour $x \geqq 0$ et $y \geqq 0$.

Ce dernier résultat s'écrit:

$$\frac{\partial}{\partial u} IR(u,v) = \int_v^{+\infty} dy \cdot \left[ C(x,y) \right]_u^{+\infty} = - \int_v^{+\infty} C(u,y) dy \ . \qquad (2)$$

Par ailleurs, la dérivée partielle en v de la fonction définie par la relation (2) s'écrit :

$$- \frac{\partial}{\partial v} \int_v^{+\infty} C(u,y) \, dy$$

soit :

$$- \int_v^{+\infty} \frac{\partial}{\partial v} \ C(u,y) dy = C(u,v)$$

Ainsi la double dérivée partielle en u et v de la fonction matricielle

$$IR(ui, vj) \begin{matrix} 0 \le i \le I \\ 0 \le j \le J \end{matrix}$$

approche la fonction caractéristique bidimensionnelle C(x, y) recherchée de l'élément continu de transformation optique 22.

L'homme du métier appréciera que le dispositif de conversion optoélectronique 23 peut consister en un capteur matriciel, par exemple de type CCD (Charged Coupled Device), dont chaque cellule photosensible le constituant convertit l'un respectif des niveaux de luminosité des zones élémentaires de l'image résultante en un niveau de signal électrique $IR_{ui,vj}$. Selon cette réalisation, aucun moyen moteur 24 n'est utilisé.

En outre, l'homme du métier notera que, selon une réalisation de l'invention, la mire peut être formée par un écran à cristaux liquides dont une première portion d'écran définissant la surface transparente est définie par des pixels translucides, et une seconde portion d'écran définissant la surface opaque est formée par des pixels noirs. Plus généralement, peut être utilisé tout type d'écran sur lequel est formée l'image d'une mire comprenant une surface transparente et une surface opaque séparées par un angle droit.

Pour terminer, il convient de souligner que le système 2 de la figure 3 utilisant une configuration optique en transmission est équivalent à un système à configuration optique en réflexion non représenté. Dans ce système équivalent, la lampe 20, le dispositif optique 21, l'élément optique à caractériser 22 et le dispositif de conversion optoélectronique 23 sont disposés d'un même côté de la mire MI. Les surfaces opaque et transparente de la mire MI sont redéfinies respectivement en des surfaces absorbante et réfléchissante. La portion de flux lumineux du faisceau collimaté FC réfléchie sur la surface réfléchissante de la mire MI est reçue sur la surface S de l'élément 22 pour produire l'image IR qui est scrutée par le dispositif de conversion optoélectronique 23.

**Revendications**

**1 -** Système de détermination de la fonction caractéristique bidimensionnelle (C(x,y)) d'un élément continu de transformation optique (22), comprenant

une source lumineuse (20) pour produire un faisceau lumineux (FC) qui est projeté, à travers une mire (MI), en un faisceau lumineux incident (FI) sur une surface (S) dudit élément continu (22),

ladite mire définissant deux surfaces respectivement transparente et opaque (S1,S2) délimitées par un angle,

caractérisé en ce qu'il comprend

un moyen de conversion optoélectronique (23) pour convertir des niveaux de luminosité (IR(ui,vj)) de zones élémentaires d'une image résultante (IR) produite par ledit élément continu (22) en réponse audit faisceau lumineux incident (FI), respectivement en des niveaux de signal électrique ($IR_{ui, vj}$), et

un moyen de calcul (25) pour calculer une dérivée partielle bidimensionnelle pour le niveau de signal électrique (IR$_{ui,vi}$) correspondant à chacune des zones élémentaires de l'image résultante en fonction des niveaux de signal électrique produits par ledit moyen de conversion (23) en réponse à des niveaux de luminosité respectifs de zones élémentaires contiguës à ladite chacune des zones élémentaires afin de produire ladite fonction caractéristique (C(x,y)).

**2 -** Système de détermination de la fonction caractéristique bidimensionnelle (C(x,y)) d'un élément continu de transformation optique (22), comprenant

une source lumineuse (20) pour produire un faisceau lumineux (FC) qui est réfléchi par une mire (MI), en un faisceau lumineux incident (FI), sur une surface (S) dudit élément continu (22),

ladite mire définissant deux surfaces respectivement réfléchissante et absorbante (S1,S2) délimitées par un angle,

caractérisé en ce qu'il comprend

un moyen de conversion optoélectronique (23) pour convertir des niveaux de luminosité (IR(ui,vj)) de zones élémentaires d'une image résultante (IR) produite par ledit élément continu (22) en réponse audit faisceau lumineux incident (FI), respectivement en des niveaux de signal électrique (IR$_{ui, vi}$), et

un moyen de calcul (25) pour calculer une dérivée partielle bidimensionnelle pour le niveau de signal électrique (IR$_{ui,vi}$) correspondant à chacune des zones élémentaires de l'image résultante en fonction des niveaux de signal électrique produits par ledit moyen de conversion (23) en réponse à des niveaux de luminosité respectifs de zones élémentaires contiguës à ladite chacune des zones élémentaires afin de produire ladite fonction caractéristique (C(x,y)).

**3 -** Système conforme à la revendication 1 ou 2, caractérisé en ce qu'il comprend un moyen moteur (24) commandé par ledit moyen de calcul (25) pour déplacer un capteur dudit moyen de conversion optoélectronique (23) suivant deux directions respectives parallèles à des côtés dudit angle afin de positionner le capteur (230) à des positions successives repérées bidimensionnellement définissant respectivement lesdites zones élémentaires de l'image résultante (IR).

**4 -** Système conforme à la revendication 1, 2 ou 3, caractérisé en ce que ledit angle est sensiblement égal à 90° ou 270°.

**5 -** Système conforme à l'une quelconque des revendications 1 à 4, caractérisé en ce que ledit élément continu de transformation optique (22) est un instrument optique, ladite image résultante (IR) étant sous la forme d'une image optique.

**6 -** Système conforme à l'une quelconque des revendications 1 à 4, caractérisé en ce que ledit élément continu de transformation optique (22) est un film photographique, ladite image résultante (IR) étant sous la forme d'un négatif photographique projeté vers le moyen de conversion optoélectronique (23).

**7 -** Système conforme à l'une quelconque des revendications 1 à 4, caractérisé en ce que ledit élément continu de transformation optique (22) est une surface photoconductrice, ladite image résultante (IR) étant sous la forme d'une image imprimée sur papier projetée vers le moyen de conversion optoélectronique (23).

# *FIG.1*
## *(TECHNIQUE ANTERIEURE)*

# *FIG.2*
## *(TECHNIQUE ANTERIEURE)*

# FIG.3

EP 0 681 173 A1

**Office européen des brevets**

# RAPPORT DE RECHERCHE EUROPEENNE

Numero de la demande

EP 95 40 0988

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-3 630 627 (LOW)<br>* le document en entier *<br>--- | 1,2 | G01M11/02 |
| A | PROCEEDINGS OF SPIE,<br>vol.1027, no.19, 19 Septembre 1988,<br>BELLINGHAM,WA,USA<br>pages 40 - 47<br>J.GLASSER ET AL 'An accurate method for measuring the spatial resolution of integrated image sensors'<br>----- | 1,2 | |

**DOMAINES TECHNIQUES RECHERCHES (Int.Cl.6)**

G01M

Le présent rapport a été établi pour toutes les revendications

| Lieu de la recherche | Date d'achèvement de la recherche | Examinateur |
|---|---|---|
| LA HAYE | 19 Juillet 1995 | Zafiropoulos, N |